# NOUVEAU FASCICULE DE BREVET EUROPEEN

(11) **EP 1 378 402 B2**
(45) Date de publication et mention de la décision concernant l'opposition: **23.09.2009**
(45) Mention de la délivrance du brevet: 19.10.2005
(21) Numéro de dépôt: 03291568.8
(22) Date de dépôt: 25.06.2003
(51) Int. Cl.: B60R 19/18

(54) **Profilé pour élément de structure de véhicule automobile, et châssis correspondant**
Strukturbauteil für Kraftfahrzeug und sein Chassis
Profile for structural element of an automobile and its corresponding chassis

(30) Priorité: 03.07.2002 FR 0208332
(43) Date de publication de la demande: 07.01.2004
(73) Titulaire: Wagon Automotive S.A., 78306 Poissy (FR)
(72) Inventeur: Peyronni, Alain, 78640 Neauphle le Chateau (FR); Trancart, Olivier, 78940 la queue les Yveslines (FR)
(74) Mandataire: Jacobson, Claude

(56) Documents cités:
- EP-A- 0 887 235
- DE-A- 10 044 409
- DE-C1- 10 007 496
- DE-C2- 4 340 033
- DE-C2- 19 849 358
- US-A1-2001/0 017 473
- US-B1- 6 217 089

## Description

La présente invention concerne un profilé tel que décrit dans le préambule de la revendication 1.

Un tel profilé est par exemple connu de DE 100 07 496.

Elle s'applique notamment aux poutres de pare-chocs de véhicules automobiles.

On connaît des poutres de pare-chocs fabriquées à partir de profilés métalliques. Généralement deux profilés ayant des sections transversales ouvertes sont soudées le long de leurs bords l'un à l'autre, en formant un profilé de section transversale fermée.

Ces profilés ont un coût de fabrication élevé en raison de différents profilés à souder et à manipuler.

La présente invention a pour but de pallier les inconvénients cités, et de proposer un profilé métallique qui ait un faible coût de fabrication tout en ayant une rigidité élevée pour des dimensions données.

A cet effet l'invention a pour objet un profilé comprenant les caractéristiques de la revendication 1.

Selon d'autres modes de réalisation, le profilé selon l'invention comporte l'une ou plusieurs des caractéristiques des revendications 2 à 16.

L'invention a en outre pour objet un châssis d'un véhicule automobile comprenant deux longerons et un pare-chocs, caractérisé en ce que le pare-chocs comprend un profilé tel que décrit ci-dessus.

L'invention sera mieux comprise à la lecture de la description qui va suivre, donnée uniquement à titre d'exemple et faite en se référant aux dessins annexés, sur lesquels :
- la Figure 1 est une vue éclatée d'une partie avant d'un châssis de véhicule automobile, comportant un profilé selon l'invention;
- la Figure 2A est une vue en section transversale du profilé suivant le plan IIA de la Figure 1 ; et
- les Figures 2B à 2D sont des vues en section transversale de variantes du profilé de la Figure 2A

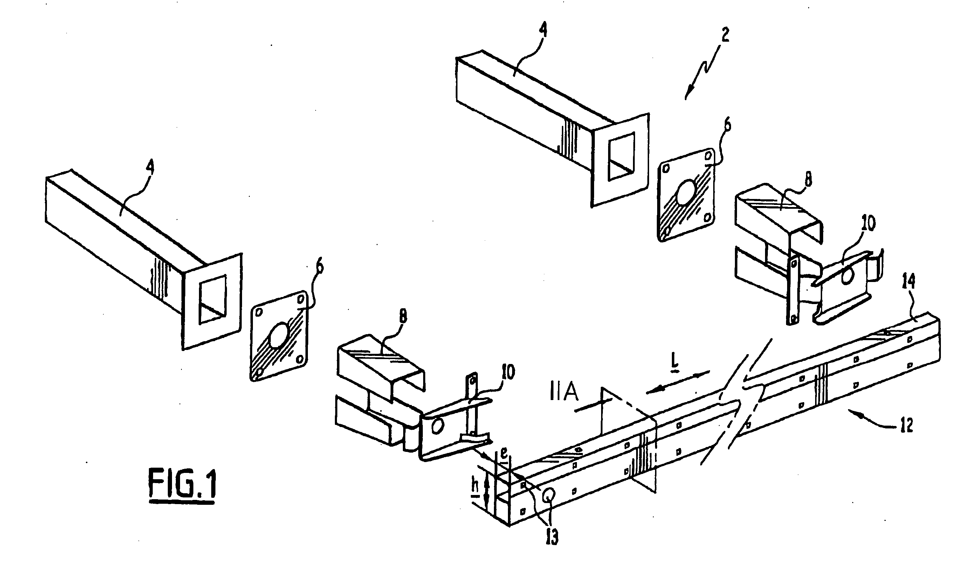

Sur la Figure 1 est représentée, vue en perspective éclatée, une partie d'un châssis d'un véhicule automobile, désigné par la référence générale 2.

Le châssis 2 comporte deux longerons 4 qui s'étendent parallèlement l'un à l'autre de la partie avant du véhicule vers l'arrière.

Chaque longeron 4 est fermé à son extrémité avant par une plaque terminale 6. Sur chacune des plaques terminales 6 est fixé un absorbeur de choc 8, s'étendant vers l'avant. Un support de poutre 10 est disposé sur l'extrémité avant de chaque absorbeur de choc 8.

Entre les deux supports de poutre 10 et en avant de ceux-ci s'étend une poutre de pare-chocs 12.

Dans ce qui suit l'expression « longitudinale » indiquera une direction L s'étendant entre les deux longerons et définissant la plus grande dimension de la poutre de pare-chocs 12. La poutre de pare-chocs 12 comprend des ouvertures 13 de fixation de composants.

La poutre de pare-chocs 12 est constituée d'un profilé 14 fabriquée en tôle.

Les expressions « avant », « arrière », « supérieur » et « inférieur » seront utilisées suivant l'orientation habituelle du véhicule.

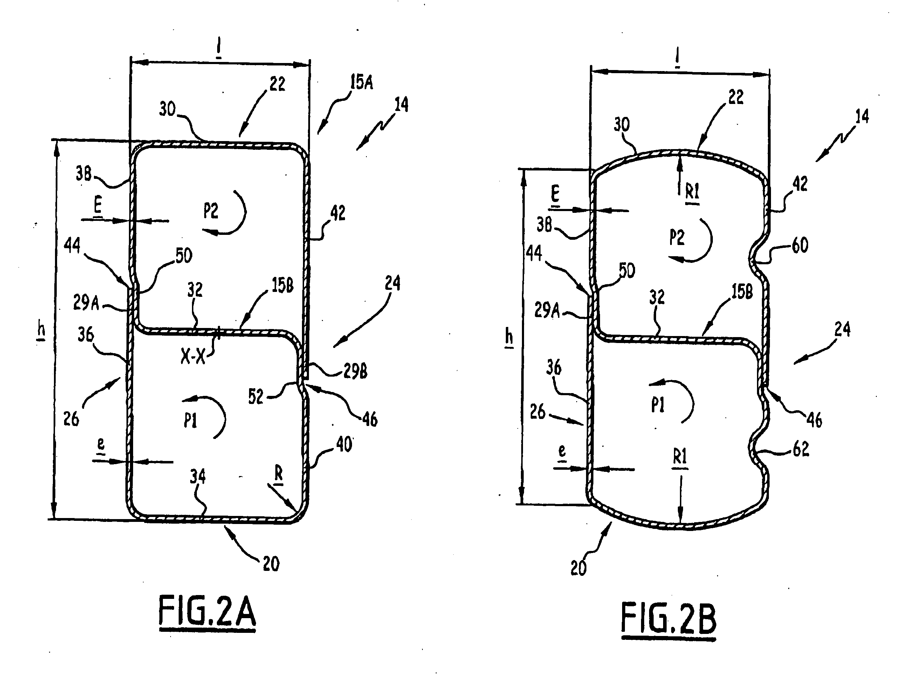

Sur la Figure 2A est représentée une coupe transversale du profilé 14, suivant le plan IIA de la Figure 1. Le plan de la coupe s'étend perpendiculairement à la direction L.

Le profilé est constitué d'une enveloppe 15A et d'une âme transversale de rigidification 15B.

La section transversale de l'enveloppe 15A définit un contour fermé et a extérieurement la forme générale d'un quadrilatère, dans le cas présent d'un rectangle. Elle a une largeur l et une hauteur h.

A l'état monté de la poutre de pare-chocs 12, la largeur l est mesurée suivant la direction générale des longerons et s'étend de l'avant du véhicule vers l'arrière 4. La hauteur h s'étend du haut vers le bas, à l'état monté de la poutre 12.

La section transversale comprend un côté de largeur inférieur 20, un côté de largeur supérieur 22, un côté de hauteur avant 24 et un côté de hauteur arrière 26. Ces côtés 20, 22, 24, 26 définissent l'enveloppe 15A du profilé 14.

L'âme de rigidification 15B s'étend entre les côtés de hauteur avant 24 et arrière 26, sensiblement parallèlement aux côtés de largeur 20, 22, à demi-distance entre ceux-ci.

La section transversale du profilé 14 est ainsi constituée de deux première 29A et seconde 29B parties de liaison ainsi que de sept segments de section.

Un premier segment de section 30 forme le côté de largeur supérieur 22, un deuxième segment de section 32 forme l'âme de rigidification 15B et un troisième segment de section 34 forme le côté de largeur inférieur 20. Le côté de hauteur arrière 26 est constitué par un quatrième segment de section 36, inférieur, et un cinquième segment de section 38, supérieur. Le côté de hauteur avant 24 est constitué par un sixième segment de section 40, inférieur, et un septième segment de section 42, supérieur.

Le profilé 14 est constitué d'un seul flan de tôle plié, d'épaisseur e constante sur toute la largeur de la tôle. Le flan de tôle comporte des bords longitudinaux 44, 46. Les parties adjacentes aux bords longitudinaux 44, 46 de la tôle forment les parties de liaison 29A, 29B.

Le flan de tôle comporte une plage 32 formant l'âme de rigidification 15B ainsi que deux marges longitudinales.

Une première marge constitue le premier segment de section 30, cinquième segment de section 38, le septième segment de section 42 ainsi que la seconde partie de liaison. La seconde marge constitue le troisième segment de section 34, le quatrième segment de section 36, le sixième segment de section 40, ainsi que la première partie de liaison 29A.

Les marges sont repliées dans le sens longitudinal de telle sorte que chacune des première 29A et seconde 29B parties de liaison chevauche partiellement un des segments de section. Les parties de liaison 29A, 29B sont appliquées sur la surface de ce segment de section respectif, et sont solidarisées à celui-ci par soudage par points.

Dans le cas présent, la première partie de liaison 29A est solidarisée avec le cinquième segment de section 38, tandis que la seconde partie de liaison 29B est solidarisée avec le sixième segment de section 40.

Chacun des segments de section est lié à un segment de section adjacent par une portion de la tôle pliée d'environ 90°.

La succession de segments de section le long de la largeur du flan de tôle, entre les bords longitudinaux 44, 46, est la suivante :

Première partie de liaison 29A, quatrième segment de section 36, troisième segment de section 34, sixième segment de section 40, deuxième segment de section 32, cinquième segment de section 38, premier segment de section 30, septième segment de section 42, et seconde partie de liaison 29B.

Entre le quatrième 36 et le troisième 34, entre le troisième 34 et le sixième 40, ainsi qu'entre le sixième 40 et le deuxième 32 segments de section, la tôle est pliée dans un seul premier sens de pliage P1, à savoir dans le contre-sens horaire sur la figure 2A. Le sens P1 est considéré de la partie de liaison 29A vers la plage 32. Entre le deuxième 32 et le cinquième 38, entre le cinquième 38 et le premier 30, ainsi qu'entre le premier 30 et le septième 42 segments de section, la tôle est pliée dans un seul second sens de pliage P2, inverse par rapport au premier sens de pliage P1. En l'occurrence, ce sens P2 est le sens horaire sur la Figure 2A. Le sens P2 est considéré de la plage 32 vers la partie de liaison 29B.

Le cinquième 38 et le sixième 40 segments de section comprennent chacun un épaulement 50, 52 de largeur E, identique à l'épaisseur e de la tôle. Ces épaulements 50, 52 reçoivent les parties de liaison 29A, 29B.

Les segments de section 30, 32, 34, 36, 38, 40, 42 sont sensiblement droits.

Les parties pliées ont un rayon de courbure intérieur R qui est supérieur ou égale à trois fois l'épaisseur e de la tôle, par exemple R ≥ 3,6 mm pour une épaisseur e de la tôle de 1,2 mm.

Le flan de tôle est formé d'une tôle en acier à haute limite élastique, de préférence ayant une force de rupture supérieure à 800 MPa, et de préférence inférieure à 1000 MPa.

On constate que la section transversale du profilé 14 est symétrique par rapport à un axe X-X s'étendant suivant la longueur L de la poutre 12.

En outre, les deux bords longitudinaux 44, 46 sont fixés sur deux côtés différents, notamment sur les deux côtés de hauteur 24, 26 opposés. Ainsi, chaque bord 44, 46 est fixé sur un seul segment de section et sur un seul côté du profilé.

En variante, les parties de liaison 29A, 29B sont fixées par un soudage du type MIG.

Le profilé selon l'invention est fabriqué de la façon suivante.

Tout d'abord, un flan de tôle ou une bande en tôle de largeur correspondant à la largeur cumulée des segments de section 30 à 42 et des parties de liaison 29A, 29B est fabriquée.

Ensuite, la bande en tôle est pliée et soudée selon sa longueur en continu par plusieurs étapes de pliage et de soudage.

En premier lieu, la bande traverse une étape de profilage qui forme les épaulements 50, 52.

Ensuite, la bande traverse une étape de pliage qui forme les deux plis de 90° adjacents au deuxième segment de section 32, qui forme l'âme de rigidification 28, ces deux plis ayant des sens de pliage opposés l'un de l'autre.

Puis la bande traverse deux étapes de pliage successives de 90° qui forment les plis liant le sixième segment de section 40 et le troisième segment de section 34, ainsi que le troisième segment de section 34 et le quatrième segment de section 36. La première partie de liaison 29A vient alors s'appliquer contre les épaulements 50.

Puis la première partie de liaison 29A est soudée sur l'épaulement 50.

Ensuite, le demi-profilé obtenu traverse deux étapes de pliage successives de 90° qui forment les plis liant le cinquième segment de section 38 et le premier segment de section 30, ainsi que le premier segment de section 30 et le septième segment de section 42. La seconde partie de liaison 29B vient s'appliquer contre l'épaulement 52.

La seconde partie de liaison 29B est soudée sur le second épaulement 52.

Afin de former la poutre de pare-chocs 12, le profilé 14 ainsi obtenu est coupé à la longueur requise de la poutre 12. En conséquence, le profilé peut être utilisé pour des véhicules de largeur différente.

Enfin, les ouvertures 13 de fixation de composants sur la poutre sont découpées.

Eventuellement, la poutre 12 est cintrée suivant sa longueur.

Il est à noter que les étapes de pliage sont effectuées à froid. En conséquence, la fabrication du profilé utilise peu d'énergie.

Grâce au pliage, la matière de la tôle maintient sensiblement son épaisseur initiale.

Par ailleurs, la tôle utilisée pour le profilé 14 peut être une tôle à haute limite élastique, qui ne nécessite aucun traitement ou durcissement supplémentaire après la mise en forme du profilé 14.

Sur la Figure 2B est représentée une section transversale d'une variante d'un profilé selon l'invention. Uniquement les différences par rapport au profilé décrit ci-dessus seront indiquées. Les éléments analogues portent les mêmes références.

Les côtés de largeur supérieur 22 et inférieur 20 ont une section transversale bombée convexe. En l'occurrence, cette section transversale est en forme d'arc de cercle de rayon R1.

L'enveloppe 15A de ce profilé 14 comporte en outre deux bourrelets de rigidification 60, 62 ménagés dans le côté de hauteur avant 24. Ces bourrelets 60, 62 ont une forme concave ouverte vers l'extérieur de l'enveloppe 15A. La section transversale de chacun de ces bourrelets 60, 62 est sensiblement en arc de cercle de 120°. Les bourrelets 60, 62 s'étendent sur toute la longueur de la poutre 12.

Le premier bourrelet 60 est disposé dans la partie supérieure du côté de hauteur avant 24, tandis que le second bourrelet 62 est disposé à la partie inférieure du côté de hauteur avant 24.

La fabrication de ce profilé est essentiellement identique à la fabrication du profilé décrit ci-dessus.

Comme différence, après l'étape de pliage des épaulements 50, 52, une étape supplémentaire de formation des bourrelets de rigidification 60, 62 est effectuée.

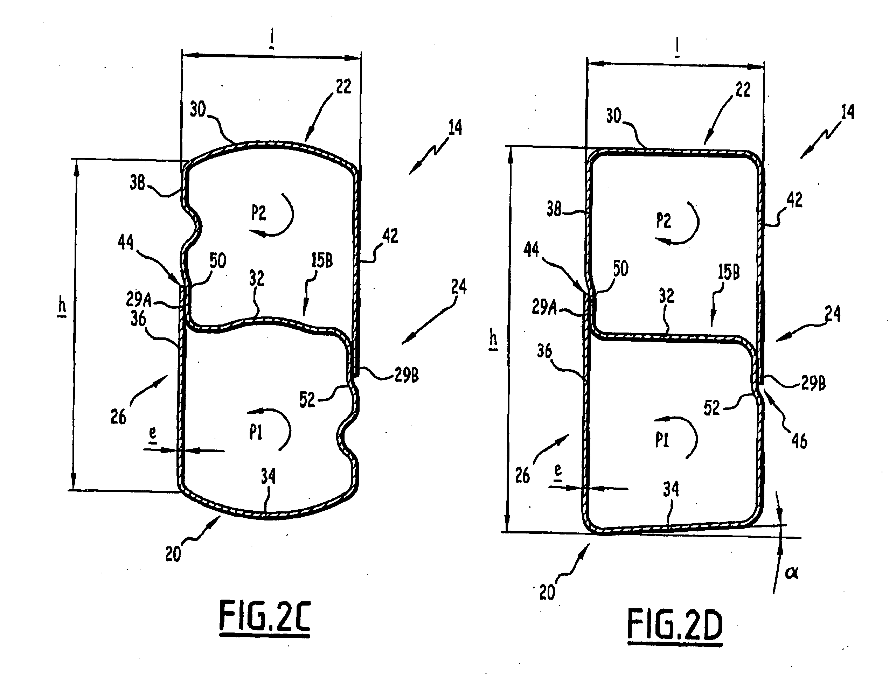

Le profilé de la Figure 2C diffère de celui de la Figure 2B dans les points suivants.

Le premier bourrelet de rigidification 60 est disposé sur la partie supérieure du côté de hauteur arrière 26.

De plus, l'âme de rigidification 28 a une section transversale bombée, convexe vers le côté de largeur supérieur 22. La forme bombée facilite la déformation lors d'un choc et conduit à une capacité d'absorption d'énergie importante.

Le profilé de la Figure 2D est constitué de segments de section droite, comme le profilé de la Figure 2A.

Comme différence par rapport au profilé de la Figure 2A, ce profilé comprend un troisième segment de section 34 qui est plié d'un angle de 90°+ α par rapport au sixième segment de section 36. L'angle α est inférieur à 3,5°.

En variante, les bourrelets de rigidification 60, 62 sont disposés sur le côté de hauteur avant 24. Les bourrelets 60, 62 ont une forme générale de U, ouvert vers l'avant.

En variante encore, les bourrelets de rigidification 60, 62 ont une section transversale en forme de gouttes.

Il est à noter que les bourrelets de rigidification 60, 62 en forme de U ou en forme de gouttes peuvent être prévus sur les profilés des Figures 2A à 2D.

Il est à noter que dans le cas de toutes les variantes de bourrelets de rigidification 60, 62, le rayon de courbure de la section transversale en tout point est supérieur à trois fois l'épaisseur e de la tôle.

Le profilé 14 selon l'invention est léger et rigide pour des dimensions données. De plus, il est facile à fabriquer.

Le profilé étant sensiblement symétrique, la manutention est facile.

En variante, les parties de liaison 29A, 29B peuvent être solidarisées du reste du profilé par collage.

## Revendications

1. Profilé pour élément de structure de véhicule automobile, notamment pour un élément de structure de pare-chocs avant ou arrière (12), le profilé (14) s'étendant suivant une direction longitudinale (L), et comprenant une enveloppe extérieure définissant en section un contenu fermé, le profilé comportant une âme transversale de rigidification disposée à l'intérieur de l'enveloppe et reliant des points opposés de l'enveloppe,
le profilé étant fabriqué à partir d'un flan de tôle ayant deux bords longitudinaux (44, 46), le flan de tôle comprenant :
. une plage (32) formant l'âme de rigidification (15B) du profilé, et
. deux marges longitudinales (29A, 34, 36, 40 ; 29B, 30, 38, 42) qui bordent de part et d'autre ladite âme de rigidification (15B), et qui sont repliées longitudinalement,
les deux bords longitudinaux (44, 46) du flan de tôle étant solidarisés audit flan de tôle dans sa partie courante,
l'enveloppe extérieure ayant une section transversale qui est formée par des segments de section de l'enveloppe (30, 34, 36, 38, 40, 42),
le profilé comprenant un segment de section (32) qui forme l'âme de rigidification (15B),
chaque marge longitudinale (29A, 34, 36, 40 ;29B, 30, 38, 42) constituant au moins un segment de section de l'enveloppe (34, 36, 40 ; 30, 38, 42), et lesdites marges (29A, 34, 36, 40 ; 29B, 30, 38, 42) étant repliées suivant des premier (P1) et second (P2) sens opposés vers ladite âme de rigidification (15B), **caractérisé en ce que** l'épaisseur (e) du flan de tôle est sensiblement identique sur toute la section transversale, et **en ce qu'**au moins l'un des segments de section comprend un épaulement (50, 52), la largeur (E) de cet épaulement étant identique à l'épaisseur (e) de la tôle, et **en ce que** l'épaulement reçoit une partie de liaison (29A, 29B).

2. Profilé suivant la revendication 1, **caractérisé en ce que** la section transversale de l'enveloppe est en forme de quadrilatère et comprend deux côtés de largeur (20, 22), et deux côtés de hauteur (24, 26), l'âme de rigidification (15B) s'étendant entre les côtés de largeur (20, 22),
**en ce que** la section transversale est formée par :
- six segments de section de l'enveloppe comprenant deux segments de section (30, 34) formant les deux côtés de largeur (20, 22) et deux segments de section (36, 38, 40, 42) formant, à chaque fois, les deux côtés de hauteur (24, 26), ainsi que par
- deux première (29A) et seconde (29B) parties de liaison.

3. Profilé suivant la revendication 2, **caractérisé en ce que** les parties de liaison (29A, 29B) sont formées par des parties adjacentes aux bords longitudinaux (44, 46).

4. Profilé suivant l'une quelconque des revendications 1 à 3, **caractérisé en ce qu'**une première marge constitue le premier segment de section (30), le cinquième segment de section (38), le septième segment de section (42) ainsi que la seconde partie de liaison (29B) et la seconde marge constitue le troisième segment de section (34), le quatrième segment de section (36), le sixième segment de section (40), ainsi que la première partie de liaison (29A).

5. Profilé suivant la revendication 2 ou 3, **caractérisé en ce que** la section transversale est formée par la succession de segments de section suivante :
. première partie de liaison (29A)
- premier segment de section (36) d'un premier côté de hauteur (26)
- segment de section (34) d'un premier côté de largeur (20)
- premier segment de section (40) d'un second côté de hauteur (24)
- segment de section (32) d'âme de rigidification (15B)
- second segment de section (38) dudit premier côté de hauteur (26)
- segment de section (30) d'un second côté de largeur (22)
- second segment de section (42) dudit second côté de hauteur (24)
. seconde partie de liaison (29B).

6. Profilé suivant la revendication 5, **caractérisé en ce que** ladite première partie de liaison (29A) est solidarisée avec le second segment de section (38) dudit premier côté de hauteur (26), et ladite seconde partie de liaison (29B) est solidarisée avec ledit premier segment de section (40) dudit second côté de hauteur (24).

7. Profilé suivant la revendication 4 ou 5, **caractérisé en ce que** le flan de tôle est plié d'environ 90° d'un segment de section à l'autre, dans ledit premier sens (P1) entre ledit premier segment de section (36) dudit premier côté de hauteur (26) et le segment de section (32) d'âme de rigidification (15B) et dans ledit second sens (P2) entre le segment de section (32) d'âme de rigidification (15B) et ledit second segment de section (42) dudit second côté de hauteur (24).

8. Profilé suivant l'une quelconque des revendications 3 à 7, **caractérisé en ce que** la section transversale est symétrique par rapport à un axe central (X-X) s'étendant suivant la direction longitudinale.

9. Profilé suivant l'une quelconque des revendications précédentes, **caractérisé en ce qu'**il comprend au moins un bourrelet de rigidification (60, 62) s'étendant le long du profilé (14), et notamment formant un creux ouvert vers l'extérieur du profilé.

10. Profilé suivant la revendication 9, **caractérisé en ce que** les bourrelets de rigidification (60) ont une section transversale en forme de goutte.

11. Profilé suivant la revendication 9 ou 10, **caractérisé en ce que** les bourrelets de rigidification (60, 62) ont une forme générale de U, ouvert vers l'avant.

12. Profilé suivant la revendication 2 ou l'une quelconque des revendications dépendantes de la revendication 2, **caractérisé en ce que** les deux segments de section (30, 34) de côté de largeur (20, 22) et/ou le segment de section (32) d'âme de rigidification (15B) sont bombés.

13. Profilé suivant l'une quelconque des revendications 1 à 12, **caractérisé en ce que** le profilé est formé d'une tôle en acier à haute limite élastique, de préférence ayant une force de rupture supérieure à 800 Mpa et en particulier inférieure à 1000 Mpa.

14. Profilé suivant l'une quelconque des revendications précédentes, **caractérisé en ce que** les deux bords longitudinaux (44, 46) du flan de tôle sont fixés sur des côtés opposés, notamment sur les côtés opposés de hauteur (24, 26).

15. Profilé suivant l'une quelconque des revendications précédentes, **caractérisé en ce que** le profilé a une section symétrique par rapport a son axe (X-X).

16. Châssis d'un véhicule automobile comprenant deux longerons (4) et un pare-chocs (12), **caractérisé en ce que** le pare-chocs (12) comprend un profilé (14) selon l'une quelconque des revendications précédentes.

## Claims

1. Profiled section for a motorised vehicle structural part, particularly for a structural part of a front or rear bumper (12), the profiled section (14) extending in a longitudinal direction (L), and comprising an outer casing defining as a section an enclosed content, the profiled section having a transverse strengthening web arranged inside the casing and connecting opposite points of the casing,
the profiled section being manufactured from a blank sheet metal with two longitudinal edges (44, 46), the blank sheet metal comprising:
an area (32) forming the strengthening web (15B) of the profiled section, and
two longitudinal margins (29A, 34, 36 40; 29B, 30, 38, 42) which edge on either side the said strengthening web (15B), and which are folded longitudinally, the two longitudinal edges (44, 46) of the blank sheet metal being integral with the ordinary part of the said blank sheet metal, the outer casing having a cross section which is formed by section segments of the casing (30, 34, 36, 38, 40, 42),
the profiled section having a section segment (32) which forms the strengthening web (15B),
each longitudinal margin (29A, 34, 36, 40; 29B, 30, 38, 42) constituting at least one section segment of the casing (34, 36, 40; 30, 38, 42), and the said margins (29A, 34, 36, 40; 29B, 30, 38, 42) being folded along the first (P1) and second (P2) directions towards the said strengthening web (15B),
**characterised in that** the thickness (e) of the blank sheet metal is more or less identical over the whole cross section, and **in that** at least one of the section segments has a shoulder (50, 52), the width (E) of this shoulder being identical with the thickness (e) of the sheet metal, and **in that** the shoulder takes a connecting part (29A, 29B).

2. Profiled section according to Claim 1, **characterised in that** the cross section of the casing is quadrilateral in shape and consists of two width-wise sides (20, 22) and two height-wise sides (24, 26), the strengthening web (15B) extending between the width-wise sides (20, 22),
**in that** the cross section is formed by:
- six section segments of the casing comprising two section segments (30, 34) forming the two width-wise sides (20, 22) and two section segments (36, 38, 40, 42) forming, every time, the two height-wise sides (24, 26), as well as by:
- two first (29A) and second (29B) connecting parts.

3. Profiled section according to Claim 2, **characterised in that** the connecting parts (29A, 29B) are formed by parts adjacent to the longitudinal edges (44, 46).

4. Profiled section according to any one of the Claims 1 to 3, **characterised in that** a first margin constitutes the first section segment (30), the fifth section segment (38), the seventh section segment (42) as well as the second connecting part (29B) and the second margin constitutes the third section segment (34), the fourth section segment (36), the sixth section segment (40), as well as the first connecting part (29A).

5. Profiled section according to Claim 2 or 3, **characterised in that** the cross section is formed by the following sequence of section segments:
first connecting part (29A)
- first section segment (36) of a first height-wise side (26)
- section segment (34) of a first width-wise side (20)
- first section segment (40) of a second height-wise side (24)
- section segment (32) of strengthening web (15B)
- second section segment (38) of the said first height-wise side (26)
- section segment (30) of a second width-wise side (22)
- second section segment (42) of the said second height-wise side (24)
second connecting part (29B).

6. Profiled section according to Claim 5, **characterised in that** the said first connecting part (29A) is integral with the second section segment (38) of the said first height-wise side (26), and the said second connecting part (29B) is integral with the said first section segment (40) of the said second height-wise side (24).

7. Profiled section according to Claim 4 or 5, **characterised in that** the blank sheet metal is bent by about 90' from one section segment to another, in the said first direction (P1) between the said first section segment (36) of the said first height-wise side (26) and the section segment (32) of the strengthening web (15B) and in the said second direction (P2) between the section segment (32) of the strengthening web (15B) and the said second section segment (42) of the said second height-wise side (24).

8. Profiled section according to any one of the Claims 3 to 7, **characterised in that** the cross section is symmetrical in relation to a centreline (X-X) extending in the longitudinal direction.

9. Profiled section according to any one of the foregoing claims, **characterised in that** it includes at least one strengthening beading (60, 62) extending along the profiled section (14), and in particular forming a hollow open towards the outside of the profiled section.

10. Profiled section according to Claim 9, **characterised in that** the cross section of the strengthening beadings (60) is beaded.

11. Profiled section according to Claim 9 or 10, **characterised in that** the strengthening beadings (60, 62) have a general U-shape, opening towards the front.

12. Profiled section according to Claim 2, or any one of the claims dependent on Claim 2, **characterise in that** the two section segments (30, 34) on the width-wise side (20, 22) and/or the section segment (32) of the strengthening web (15B) are convex.

13. Profiled section according to any one of the Claims 1 to 12, **characterised in that** the profiled section is formed from steel sheet with a high yield strength, preferably with a breaking force above 800 Mpa and in particular below 1000 Mpa.

14. Profiled section according to any one of the foregoing claims, **characterised in that** the two longitudinal edges (44, 48) of the blank sheet metal are fixed to opposite sides, particularly to the opposite height-wise sides (24, 26).

15. Profiled section according to any one of the foregoing claims, **characterised in that** the section of the profiled section is symmetrical in relation to its centreline (X-X).

16. Motorised vehicle chassis consisting of two side members (4) and a bumper (12), **characterised in that** the bumper (12) has a profiled section (14) according to any one of the foregoing claims.

## Patentansprüche

1. Profil für Kraftfahrzeugrahmenteil, insbesondere für ein Rahmenteil für eine vordere oder hintere Stoßstange (12), wobei sich das Profil (14) in einer Längsrichtung (L) erstreckt und eine Außenhülle umfasst, die im Querschnitt ein geschlossenes Inneres begrenzt, wobei das Profil einen quer verlaufenden Versteifungssteg aufweist, der im Inneren der Hülle angeordnet ist und einander gegenüberliegende Punkte der Hülle verbindet,
wobei das Profil aus einem Blechzuschnitt mit zwei Längskanten (44, 46) hergestellt wird, wobei der Blechzuschnitt aufweist:
- einen Bereich (32), der den Versteifungssteg (15B) des Profils bildet, und
- zwei Längsränder (29A, 34, 36, 40; 29B, 30, 38, 42), die den genannten Versteifungssteg (15B) beiderseits begrenzen und die in Längsrichtung umgebogen sind,
wobei die beiden Längskanten (44, 46) des Blechzuschnittes am genannten Blechzuschnitt in dessen Hauptteil befestigt sind,
wobei die Außenhülle einen Querschnitt hat, der aus Querschnittsabschnitten der Hülle (30, 34, 36, 38, 40, 42) besteht,
wobei das Profil einen Querschnittsabschnitt (32) aufweist, der den Versteifungssteg (15B) bildet,
wobei jeder Längsrand (29A, 34, 36, 40; 29B, 30, 38, 42) mindestens einen Querschnittsabschnitt der Hülle (34, 36, 40; 30, 38, 42) bildet und wobei die genannten Ränder (29A, 34, 36, 40; 29B, 30, 38, 42) in einer ersten Richtung (P1) und einer zweiten, dieser entgegengesetzten Richtung (P2) zum genannten Versteifungssteg (15B) umgebogen sind, **dadurch gekennzeichnet, dass**
die Dicke (e) des Blechzuschnittes über den ganzen Querschnitt im Wesentlichen gleich ist und dadurch, dass mindestens einer der Querschnittsabschnitte einen Absatz (50, 52) aufweist, wobei die Breite (E) dieses Absatzes gleich der Dicke (e) des Bleches ist, und dadurch, dass der Absatz einen Verbindungsteil (29A, 29B) aufnimmt.

2. Profil nach Patentanspruch 1, **dadurch gekennzeichnet, dass** der Querschnitt der Hülle viereckig ist und zwei Breitenseiten (20, 22) und zwei Höhenseiten (24, 26) aufweist, wobei der Versteifungssteg (15B) zwischen den Breitenseiten (20, 22) verläuft,
dadurch, dass der Querschnitt besteht aus:
- sechs Querschnittsabschnitten der Hülle, umfassend zwei Querschnittsabschnitte (30, 34), die die beiden Breitenseiten (20, 22) bilden und zwei Querschnittsabschnitte (36, 38, 40, 42), die jeweils die beiden Höhenseiten (24, 26) bilden, sowie aus
- einem ersten (29A) und einem zweiten (29B) Verbindungsteil.

3. Profil nach Patentanspruch 2, **dadurch gekennzeichnet, dass** die Verbindungsteile (29A, 29B) durch an die Längsränder (44, 46) anschließende Teile gebildet werden.

4. Profil nach irgendeinem der Patentansprüche 1 bis 3, **dadurch gekennzeichnet, dass** ein erster Rand den ersten Querschnittsabschnitt (30) bildet, den fünften Querschnittsabschnitt (38), den siebten Querschnittsabschnitt (42), sowie den zweiten Verbindungsteil (29B) und der zweite Rand den dritten Querschnittsabschnitt (34) bildet, den vierten Querschnittsabschnitt (36), den sechsten Querschnittsabschnitt (40), sowie den ersten Verbindungsteil (29A).

5. Profil nach Patentanspruch 2 oder 3, **dadurch gekennzeichnet, dass** der Querschnitt aus der folgenden Folge von Querschnittsabschnitten besteht:
- erster Verbindungsteil (29A)
- erster Querschnittsabschnitt (36) einer ersten Höhenseite (26)
- Querschnittsabschnitt (34) einer ersten Breitenseite (20)
- erster Querschnittsabschnitt (40) einer zweiten Höhenseite (24)
- Querschnittsabschnitt (32) des Versteifungssteges (15B)
- zweiter Querschnittsabschnitt (38) der genannten ersten Höhenseite (26)
- Querschnittsabschnitt (30) einer zweiten Breitenseite (22)
- zweiter Querschnittsabschnitt (42) der genannten zweiten Höhenseite (24)
- zweiter Verbindungsteil (29B).

6. Profil nach Patentanspruch 5, **dadurch gekennzeichnet, dass** der genannte erste Verbindungsteil (29A) am zweiten Querschnittsabschnitt (38) der genannten ersten Höhenseite (26) befestigt ist und der genannte zweite Verbindungsteil (29B) am genannten ersten Querschnittsabschnitt (40) der genannten zweiten Höhenseite (24) befestigt ist.

7. Profil nach Patentanspruch 4 oder 5, **dadurch gekennzeichnet, dass** der Blechzuschnitt von einem Querschnittsabschnitt zum nächsten um ungefähr 90° umgebogen wird, und zwar in der genannten ersten Richtung (P1) zwischen dem genannten ersten Querschnittsabschnitt (36) der genannten ersten Höhenseite (26) und dem Querschnittsabschnitt (32) des Versteifungssteges (15B) und in der genannten zweiten Richtung (P2) zwischen dem Querschnittsabschnitt (32) des Versteifungssteges (15B) und dem genannten zweiten Querschnittsabschnitt (42) der genannten zweiten Höhenseite (24).

8. Profil nach irgendeinem der Patentansprüche 3 bis 7, **dadurch gekennzeichnet, dass** der Querschnitt relativ zu einer Mittelachse (X-X) symmetrisch ist, die in Längsrichtung verläuft.

9. Profil nach irgendeinem der vorangehenden Patentansprüche, **dadurch gekennzeichnet, dass** es mindestens eine Versteifungswulst (60, 62) umfasst, die sich über die Länge des Profils (14) erstreckt und insbesondere eine vom Profil nach außen offene Vertiefung bildet.

10. Profil nach Patentanspruch 9, **dadurch gekennzeichnet, dass** die Versteifungswülste (60) einen tropfenförmigen Querschnitt haben.

11. Profil nach Patentanspruch 9 oder 10, **dadurch gekennzeichnet, dass** die Versteifungswülste (60, 62) im Wesentlichen die Form eines nach vorne offenen U haben.

12. Profil nach Patentanspruch 2 oder irgendeinem der von Patentanspruch 2 abhängigen Ansprüche, **dadurch gekennzeichnet, dass** die beiden Querschnittsabschnitte (30, 34) der Breitenseite (20, 22) und/oder der Querschnittsabschnitt (32) des Versteifungssteges (15B) gewölbt sind.

13. Profil nach irgendeinem der Patentansprüche 1 bis 12, **dadurch gekennzeichnet, dass** das Profil aus einem Stahlblech mit hoher Elastizitätsgrenze geformt wird, vorzugsweise mit einer Bruchkraft größer als 800 Mpa und insbesondere kleiner, als 1000 Mpa.

14. Profil nach irgendeinem der vorangehenden Patentansprüche, **dadurch gekennzeichnet, dass** die beiden Längsränder (44, 46) des Blechzuschnittes an gegenüberliegenden Seiten befestigt sind, insbesondere an gegenüberliegenden Höhenseiten (24, 26).

15. Profil nach irgendeinem der vorangehenden Patentansprüche, **dadurch gekennzeichnet, dass** das Profil einen relativ zu seiner Achse (X-X) symmetrischen Querschnitt hat.

16. Rahmen eines Kraftfahrzeuges, zwei Längsträger (4) und eine Stoßstange (12) umfassend, **dadurch gekennzeichnet, dass** die Stoßstange (12) ein Profil (14) nach irgendeinem der vorangehenden Patentansprüche aufweist.
